# EUROPEAN PATENT APPLICATION

(11) **EP 4 241 949 A2**
(43) Date of publication of application: **13.09.2023**
(21) Application number: 23178241.8
(22) Date of filing: 16.04.2019
(51) Int. Cl.: B27N 1/02

(54) **PROCESS FOR PREPARING A BONDING RESIN**

(30) Priority: 20.04.2018 SE 1850467
(62) Divisional of application: 19789198.9
(71) Applicant: Stora Enso Oyj, 00101 Helsinki (FI)
(72) Inventor: NASLI BAKIR, Ben, 132 35 Saltsjö-Boo (SE); ZAFAR, Ashar, 138 32 Älta (SE); EKSTRÖM, Jesper, 121 45 Johanneshov (SE)
(74) Representative: Steinrud, Henrik

(57) **Abstract**

The present invention relates to a process for preparing a bonding resin, wherein a resin prepared from lignin, phenol and formaldehyde is mixed with a resin prepared from phenol and formaldehyde to achieve a mixture useful as a bonding resin useful in the manufacture of laminates, mineral wool insulation and wood products such as plywood, laminated veneer lumber (LVL), medium density fiberboards (MDF) and particle boards.

## Description

### Field of the invention

The present invention relates to a process for preparing a bonding resin, wherein a resin prepared from lignin, phenol and formaldehyde is mixed with a resin prepared from phenol and formaldehyde to achieve a mixture useful as a bonding resin useful in the manufacture of laminates, mineral wool insulation and wood products such as plywood, laminated veneer lumber (LVL), medium density fiberboards (MDF) and particle boards.

### Background

Lignin, an aromatic polymer is a major constituent in e.g. wood, being the most abundant carbon source on Earth second only to cellulose. In recent years, with development and commercialization of technologies to extract lignin in a highly purified, solid and particularized form from the pulp-making process, it has attracted significant attention as a possible renewable substitute to primarily aromatic chemical precursors currently sourced from the petrochemical industry.

Lignin, being a polyaromatic network has been extensively investigated as a suitable substitute for phenol during production of phenol-formaldehyde adhesives. These are used during manufacturing of structural wood products such as plywood, oriented strand board and fiberboard. During synthesis of such adhesives, phenol, which may be partially replaced by lignin, is reacted with formaldehyde in the presence of either basic or acidic catalyst to form a highly cross-linked aromatic resins termed novolacs (when utilizing acidic catalysts) or resoles (when utilizing basic catalysts). Currently, only limited amounts of the phenol can be replaced by lignin due to the lower reactivity of lignin.

One problem when preparing resins comprising lignin is to optimize the properties of the final resin for different products. In an industrial setting, it is essential to be able to quickly adapt the properties of resins, to ensure optimal performance of the resins in the manufacture of the final products, such as laminate and structural wood products such as plywood, oriented strand board and fiberboard. At the same time, it is desirable to use as much lignin, a renewable material, as possible in the resins and at the same time minimize the use of phenol. Since resins need to have different properties depending on end use, numerous different resins, i.e. individual resins having different properties, need to be produced and sometimes stored, to allow the production of a range of final end products. Significant storage space may be required, alternatively different types of resin recipes need to be used either in parallel, requiring additional mixing equipment, or serially which requires cleaning of reaction vessels between resin batches and a risk that when production requirements change, the resin preparation is too slow and is unable to meet the needs of the required end use, thereby reducing overall efficiency of production of final products and thereby a significant cost increase of such production.

### Summary of the invention

It has now surprisingly been found that it is possible to optimize the properties of a resin mixture without producing a separate resin for each intended end-use. Instead, a first resin and a second resin is prepared, optionally stored, and then mixed in a ratio adapted to achieve defined and required resin properties. Thereby, the speed of production of products manufactured using resins, and particularly the efficiency of shifting between producing resins having properties adapted for different such products, can be significantly improved.

The present invention is thus directed to a method for preparing a resin in the form of a mixture comprising the steps of
a) preparing a first resin comprising lignin, phenol and formaldehyde;
b) preparing a second resin comprising phenol and formaldehyde,
   wherein the second resin comprises less than 1 wt-% lignin, by weight of the second resin;
c) mixing the first resin and the second resin in a weight ratio of from 0.5:10 to 10:0.5 based on weight of the mixture of the first resin and second resin.

The first resin can be prepared using methods known in the art. For example, lignin can be dissolved into an aqueous medium comprising alkali. The dissolution of the lignin may be carried out with or without heating. In a subsequent step, phenol and formaldehyde is added to the solution, separately or simultaneously. The reaction mixture is heated to approximately 40-95°C until the reaction is completed and desirable properties, such as viscosity, have been achieved. The amount of lignin used in the preparation of the resin is typically such that lignin has replaced phenol to a replacement level of 5-95% in the first resin used in the context of the present invention. Thus, the lignin reacts during the preparation of the first resin.

Lignin may be utilized as a powder at the time that it is incorporated into the resin formulation. Lignin can also be utilized in "liquid form" in an alkali solution or as a dispersion in order to avoid lignin dust.

The second resin can be prepared using methods known in the art. There is essentially no lignin used in the preparation of the second resin. However, for practical purposes, small amounts of lignin may be present since a reaction vessel which has previously been used to prepare the first resin may be used also in the preparation of the second resin. For example, phenol and formaldehyde may be mixed in an aqueous medium, optionally in the presence of alkali, the phenol and formaldehyde being added separately or simultaneously to the liquid medium. The reaction mixture is heated to approximately 40-95°C until the reaction is completed and desirable properties, such as viscosity, have been achieved.

The first resin and the second resin may be prepared in any order prior to being mixed with each other.

The step of mixing the first resin and the second resin can be carried out at room temperature. However, it is preferable to carry out the mixing step at a temperature of from 20°C to 35°C. The mixing can be carried using traditional mixing equipment and the mixing can be carried out batch-wise or continuously. The mixing is preferably carried out such that the stirring is performed at less than 10000 rpm, more preferably in the range of from 10 to 5000 rpm, such as from 10 to 1000 rpm, particular 20 to 500 rpm. The mixing is typically carried out for at least one minute, such as from 1 minute to 2 hours, depending on the volume of the mixture being prepared.

When mixing the first resin and the second resin, the viscosity of the mixture of the first resin and the second resin is preferably monitored, either on a continuous basis or by taking samples at defined time intervals.

The amount of each of the first resin and the second resin that is added to provide the mixture of the first resin and the second resin depends on the intended use of the mixture and the required properties necessary for that use. Typically, the amount of each of the first resin and second resin is added according to a predetermined recipe such that the mixture of the first resin and the second resin yields the desired properties.

The step of mixing the first resin and the second resin is carried out until the first resin and the second resin have been adequately mixed, such that the composition of the mixture is essentially homogenous throughout the mixture obtained.

In step c) or in a subsequent step, the properties of the mixture of the first resin and the second resin can be adjusted by adding additives to the mixture. Such additives are for example acids or bases, to adjust the pH of the mixture of the first resin and the second resin to a desired pH. The additives may also be colorants, pigments, fire retardants or other additives typically used in the preparation of resins.

The present invention is thus also directed to the use of the mixture of the first resin and the second resin in the manufacture of laminates, mineral wool insulation and wood products such as plywood, laminated veneer lumber (LVL), medium density fiberboards (MDF) and particle boards. The present invention is also directed to such laminates, mineral wool insulation and wood products such as plywood, laminated veneer lumber (LVL), medium density fiberboards (MDF) and particle boards manufactured using the mixture of the first resin and the second resin.

The present invention is also directed to a method for selecting an optimized resin mixture for a specific end use, comprising the steps of
a) defining desirable properties of a resin;
b) preparing a first resin comprising lignin, phenol and formaldehyde;
c) preparing a second resin comprising phenol and formaldehyde,
   wherein the second resin comprises less than 1 wt-% lignin, by weight of the second resin;
d) mixing the first resin and the second resin in a defined weight ratio of from 0.5:10 to 10:0.5 based on weight of the mixture of the first resin and second resin;
e) in an empty vessel, repeating step d) with a different weight ratio;
f) repeating step e) at least five times with additional different weight ratios in step d) in each repetition;
g) evaluating the properties of each mixture of the first resin and the second resin, said evaluation being carried out based on the properties of the resin as such or based on the properties of a final product prepared using each mixture of the first resin and the second resin obtained in step f);
h) selecting the optimized mixture of the first resin and the second resin obtained in step f), based on the results of the evaluation carried out in step g), said selection step comprising the determination of which mixture of the first resin and second resin obtained in step f) has properties closest to the desired properties of a resin defined in step a).

The evaluation of the properties if the resin mixture or product manufactured using the resin mixture can be carried out using methods known in the art. Examples of such properties of the resin include viscosity, pH, storage time, solid content etc and of the product manufactured using the resin include pressing time, assembly time, reactivity etc. The properties concerned can be determined by the skilled person.

### Detailed description

It is intended throughout the present description that the expression "lignin" embraces any kind of lignin, e.g. lignin originated from hardwood, softwood or annular plants. Preferably the lignin is an alkaline lignin generated in e.g. the Kraft process. The lignin may then be separated from the black liquor by using the process disclosed in WO2006031175.

The pH of the mixture of the first resin and the second resin may be adjusted by addition of acid or base, depending on the final use of the mixture of the first resin and the second resin. To the extent alkali is added, it is preferably sodium hydroxide, potassium hydroxide, calcium hydroxide, magnesium hydroxide or a mixture thereof. To the extent acid is added, it is preferably sulphuric acid or paratoluenesulphonic acid.

The mixture of the first resin and the second resin according to the present invention is useful for example in the manufacture of laminates. The mixture of the first resin and the second resin is then impregnated into paper that should form the laminate and said sheets are pressed together and heated at a temperature of about 110-150 °C.

The mixture of the first resin and the second resin according to the present invention is also useful for example in the manufacture of plywood. The mixture of the first resin and the second resin is then applied to the surfaces of the plies or veneers that should form the plywood and said plies or veneers are pressed together and heated at a temperature of about 110-180 °C.

### Examples

### Example 1

Reference phenol formaldehyde (PF) resin for plywood was prepared in a 5L glass reactor and mixed with pitched blade stirrer. Firstly, 1116 g of molten phenol, 576 g of water and 461 g of NaOH solution (50%) were added to the glass reactor and mixed.

Secondly, 2048 g of 40% formaldehyde solution was added slowly to prevent excessive heat development. The temperature was kept constant at 60°C for 30 minutes and was then increased to 80 °C. When the viscosity had increased to approximately 200-250 cP, the temperature was set to 75 °C and 155g of NaOH solution (50%) was added. When the target viscosity of 220-250cP was obtained, the reaction was stopped by cooling to ambient temperature. The reaction was monitored by measuring the viscosity at 25 °C using a Brookfield DV-II + LV viscometer.

The resin was analyzed and the results of the analysis are given in Table 1.

### Example 2

Lignin-phenol-formaldehyde (LPF) resin was synthesized for plywood application with a phenol replacement level of 50% with lignin.

In the first step, 918 g of powder lignin (solid content 91%) and 1225g of water were added to a 5L glass reactor at ambient temperature and were stirred until the lignin was fully and evenly dispersed. Then, 426g of 50% alkali solution was added to the lignin dispersion. The composition was heated to 73°C and stirred for 60 minutes to make sure that lignin was completely dissolved in the alkaline media. Then, the temperature of the lignin composition was lowered to 45 °C.

In the second step, 846g of phenol and 1802g of formalin solution (40%) were added into the reaction mixture. The temperature of the reaction mixture was increased to 80°C and the reaction mixture was continuously stirred for 115 minutes. Then, 315g of sodium hydroxide solution (50%) was added and the reaction temperature was cooled to 75°C. Then, the reaction mixture was continuously stirred at 75°C for further 95 minutes before cooling down to room temperature. The reaction was monitored by measuring the viscosity at 25 °C using a Brookfield DV-II + LV viscometer.

The resin was analyzed and the results of the analysis are given in Table 1.

### Example 3

The resin blend was prepared by mixing PF resin from example 1 and LPF resin from example 2 in a ratio of 1:1 by weight.

The resin blend was analyzed and the results of the analysis are given in Table 1.

**Table 1: Resin properties**

| | Resin from Example 1 | Resin from Example 2 | Resin from Example 3 |
|---|---|---|---|
| Viscosity [cP] at 25°C | 220 | 223 | 275 |
| pH at 23°C | 12.2 | 11.5 | 11.6 |
| Solid Content [%] 155°C | 43.6 | 45.5 | 44.7 |

### Example 4 - Plywood Application

Birch veneers were sawn to 300 × 300 mm² size and conditioned in 20°C, 65% RH prior to manufacture. Glue comprising resin from example 3 was formulated according to Table 2.

**Table 2: Composition of glue for plywood boards**

| Component | Amount [wt. %] |
|---|---|
| Resin from examples 3 | 71.5 |
| Filler/Hardener (contains limestone, cellulose, sodium carbonate, starch) | 14.2 |
| Water | 14.3 |

Target glue content was 165 g/m² which were spread on one side. Prepressing was performed at a pressure of 1.8 MPa for 15 minutes. The close assembly time was 30 minutes. Hot pressing was performed at 127°C with a pressure of 1.8 MPa. The total pressing time was 6 minutes 25 seconds. Prior to evaluation, all samples were conditioned according to EN636 class 3 test method. Shear strength was evaluated according to EN314 test method. Average data from 20 test specimens is presented in Table 3.

**Table 3: Plywood shear strength**

| | Shear strength [N/mm²] |
|---|---|
| Resin from Example 3 | 1.9 |

In view of the above detailed description of the present invention, other modifications and variations will become apparent to those skilled in the art. However, it should be apparent that such other modifications and variations may be effected without departing from the spirit and scope of the invention.

## Claims

1. A method for preparing a resin in the form of a mixture comprising the steps of
a) preparing a first resin comprising lignin, phenol and formaldehyde;
b) preparing a second resin comprising phenol and formaldehyde, wherein the second resin comprises less than 1 wt-% lignin, by weight of the second resin;
c) mixing the first resin and the second resin in a weight ratio of from 0.5:10 to 10:0.5 based on weight of the mixture of the first resin and second resin.

2. A method according to claim 1, wherein the mixing in step c) is carried out at from 20 to 1000 rpm.

3. A method according to claim 1 or 2, wherein duration of the mixing step is at least one minute.

4. A resin in the form of a mixture obtainable by the method of any one of claims 1-3.

5. Use of a resin in the form of a mixture according to claim 4 in the manufacture of a laminate, mineral wool insulation, wood product such as plywood, laminated veneer lumber (LVL), medium density fiberboards (MDF) or particle board.

6. Laminate, mineral wool insulation, wood product such as plywood, laminated veneer lumber (LVL), medium density fiberboards (MDF) or particle board manufactured using a resin in the form of a mixture according to claim 4.
